# EUROPÄISCHE PATENTSCHRIFT

(11) **EP 1 148 251 B1**
(45) Veröffentlichungstag und Bekanntmachung des Hinweises auf die Patenterteilung: **16.11.2005**
(21) Anmeldenummer: 01101271.3
(22) Anmeldetag: 19.01.2001
(51) Int. Cl.: F15B 11/028, F15B 13/043, F16K 17/10, F16K 31/42, G05D 16/20, G05D 7/00

(54) **Drucksteuerventil**
Pressure control valve
Soupape de commande de pression

(30) Priorität: 18.04.2000 DE 10019254
(43) Veröffentlichungstag der Anmeldung: 24.10.2001
(73) Patentinhaber: Brueninghaus Hydromatik GmbH, 89275 Elchingen (DE)
(72) Erfinder: Adler, Bernhard, 89275 Elchingen (DE); Stegmaier, Horst, 89079 Ulm (DE)
(74) Vertreter: Körfer, Thomas

(56) Entgegenhaltungen:
- EP-A- 0 117 208
- EP-A- 0 226 774
- DE-A- 2 602 844
- DE-C- 19 512 143

## Beschreibung

Die vorliegende Erfindung betrifft ein Drucksteuerventil gemäß dem Oberbegriff des Patentanspruchs 1.

Ein derartiges Druksteuerventil ist aus der EP117208 bekannt.

Ein weiteres Drucksteuerventil ist aus der DE 195 12 143 C1 bekannt. Bei diesem Ventil beaufschlagt der zu regelnde Druck des Hydraulikfluids in einem Arbeitsraum einen Prüfkolben. Dieser Prüfkolben wird von einer Vorspannungsfeder in einen Sitz gedrückt. Überschreitet der Druck einen gewissen Wert, so wird der Prüfkolben aus seinem Sitz angehoben und gibt einen Abfluß des Hydraulikfluids zu einer Abflußöffnung frei. Durch den Abfluß eines Volumenstroms der keinen dynamischen Widerstand überwinden muß, wird der Druck auf einen bestimmten Wert begrenzt. Diese in ihrem Grundschema einfachste Art der Regelung eines Drucks, eine Menge Hydraulikfluid, die den Überdruck in einem System bewirkt, da sie nicht von entsprechenden Verbrauchern aufgenommen werden kann, in einem Volumenstrom abfließen zu lassen, hat jedoch den Nachteil, daß im Gesamtsystem eine Verlustleistung und eventuell eine Wärmebildung entsteht. Es ist daher günstiger und wünschenswert, statt den Druck im hydraulischen System durch das Abfließenlassen eines Volumenstromes zu begrenzen, diesen dadurch zu begrenzen, daß die Fördermenge an Hydraulikfluid geregelt wird.

Aus der DE-OS 20 42 094 ist eine Ausführung eines Überdruckventils bekannt, die einen zweiten Druckraum und ein zweites Ventil aufweist. Dieses zweite Ventil, das als Pilotventil bezeichnet wird, regelt das Öffnen und Schließen eines ersten Ventils, das einen Querschnitt zum Abfluß eines Volumenstroms des Hydraulikfluids freigibt. Das erste Ventil besteht aus einer Hülse als Ventilkolben, der gegen einen Sitz durch eine erste Vorspannungsfeder gedrückt wird. Zentral mittig in dieser Ventilhülse befindet sich ein Drosselbohrung, über die der Druckraum, dessen Druck gemessen und geregelt werden soll, mit einem zweiten Druckraum in Verbindung steht. Der zweite Druckraum steht mit dem zweiten Ventil in Verbindung, das einen Kegel ausweist, der gegen einen Sitz von einer zweiten Vorspannungsfeder gedrückt wird. Solange das zweite Ventil geschlossen ist, ist der Druck im ersten und zweiten Druckraum gleich. Die Ventilhülse des ersten Ventils wird von der Vorspannungsfeder gegen ihren Sitz gedrückt. Wenn nun der Druck, mit dem das zweite Ventil in dem zweiten Druckraum über die Drossel beaufschlagt wird, einen voreingestellten Wert überschreitet, so öffnet das zweite Ventil. Das Hydraulikfluid kann nun abfließen und der Druck in dem zweiten Druckraum fällt stark ab, da über die Drosselbohrung nur wenig Hydraulikfluid nachfließen kann. Dadurch wird der Ventilkolben des ersten Ventils, die Hülse, nur noch von einer Seite, nämlich dem ersten Druckraum mit Druck beaufschlagt. Sie hebt sich aus ihrem Sitz und gibt die Durchflußöffnung des Ventils frei. Eine solche Ventilkonstruktion mit einem Pilotventil bietet den Vorteil, daß das Ventil ein gutes Ansprechverhalten hat. Nachteilig an dem in dieser Druckschrift beschriebenen Stand der Technik ist jedoch, daß auch hier der Druck geregelt wird, indem ein Volumenstrom zum Abfluß gebracht wird. Weiter ist der Druck, bei dem das Ventil öffnet, nur über eine Schraube, gegen die sich die zweite Ventilfeder abstützt, regelbar. Eine Verstellung während des Betriebs oder von Ferne ist nicht möglich.

Der vorliegenden Erfindung liegt somit die Aufgabe zugrunde, ein Drucksteuerventil gemäß dem Oberbegriff des Patentanspruchs 1 zu schaffen, dessen Regeldruck stufenlos fern einstellbar ist und das eine Stellgröße regelt, so daß der Druck im System durch diese Stellgröße, beispielsweise den Stelldruck einer Hydropumpe, geregelt werden kann.

Diese Aufgabe wird durch ein Drucksteuerventil gemäß dem Patentanspruch 1 gelöst.

In günstiger Weise kann ein erfindungsgemäßes Drucksteuerventil ferngeregelt werden, da über ein Steuersignal das Stellglied geregelt werden kann und über dieses der Regeldruck bestimmt wird. Vorteilhafte Weiterbildungen und Ausgestaltungen der vorliegenden Erfindung sind in den Unteransprüchen angegeben.

Vorteilhaft regelt das Drucksteuerventil nur eine Stelldruckleitung, über die die Leistung einer Förderpumpe, die den Hydraulikdruck aufbaut und aufrecht erhält, heruntergeregelt wird. Die Druckregeleung im System erfolgt somit nicht durch den Abfluß eines Volumentstroms, der nur Verlustleistung erzeugend und somit wärmeabgebend von der Förderpumpe in das Hydrauliksystem über das Druckregelventil zu einem Vorratstank oder der Pumpenansaugsseite zurückfließt.

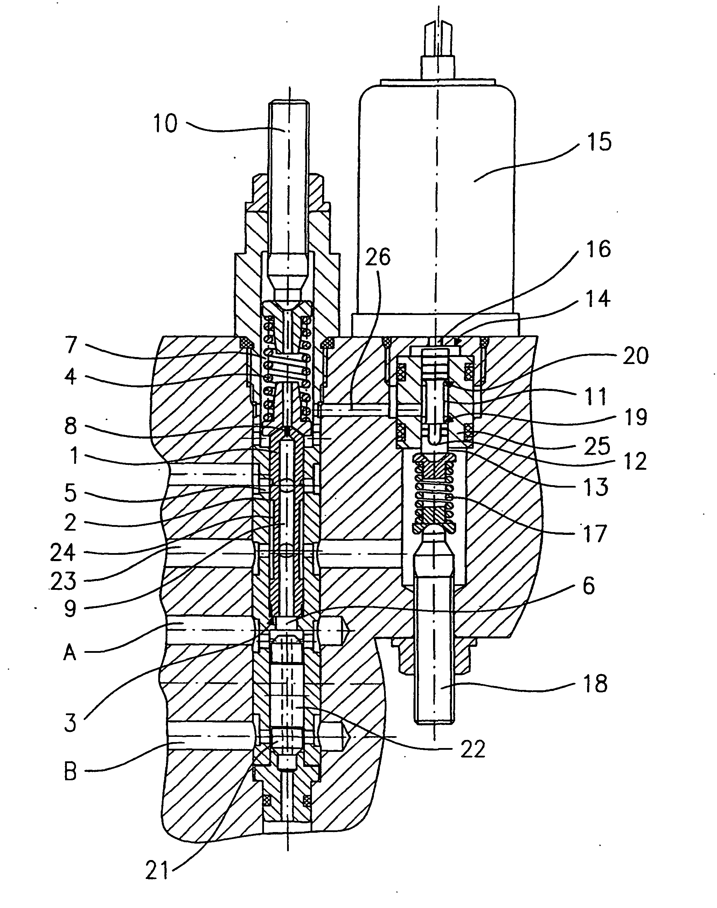

Die vorliegende Erfindung wird im Folgendem anhand eines bevorzugten Ausführungsbeispiels unter Bezug auf die einzige Figur der Zeichnung näher erläutert, wobei die Figur den Querschnitt eines erfindungsgemäßen Drucksteuerventils zeigt.

Der erste Steuerkolben 1 weist eine Steuerkante 2 auf. Diese gibt eine Stelldruckeitung 5 frei, wenn der erste Steuerkolben 1 von seinem Anschlag 3 gegen den Vorspannungsdruck einer ersten Vorspannungsfeder 4 angehoben wird. Dabei ermöglicht eine sich an die Steuerkante 2 anschließende Aussparung 24 des ersten Steuerkolbens 1 die Verbindung der Stelldruckleitung 5 mit einem Hydraulikfluidabfluß 23. Der erste Steuerkolben 1 trennt einen ersten Druckraum 6 von einem zweiten Druckraum 7. Diese sind über eine Drossel 8, die in der hier dargestellten erfindungsgemäßen Ausführungsform in einer Bohrung 9 des ersten Steuerkolbens 1 liegt, miteinander verbunden. Die beiden Druckräume 6, 7 weisen keine Verbindung zu der Aussparung 24 des ersten Steuerkolbens 1 auf. Weiter ist ein erster Gewindestift 10 dargestellt, auf dem sich die erste Vorspannungsfeder 4 abstützt.

Der zweite Druckraum 7 steht mit einem Steuerkolben 11 in Verbindung, der in der hier dargestellten Ausführungsform als Differenzflächenkolben ausgeführt ist und der eine Steuerkante 12 aufweist. Diese Steuerkante 12 arbeitet mit der Kante 13 des Führungszylinders 25 zusammen. Der zweite Steuerkolben 11 wird von einer zweiten Vorspannungsfeder 17 gegen einen Anschlag 14 gedrückt. Ein Stellglied 15, hier als elektromagnetischer Proportionalmagnet, der proportional zu dem ihn durchfließenden Strom eine Kraft ausübt, drückt über ein Verbindungselement 16 auf den zweiten Steuerkolben 11 gegen die zweite Vorspannungsfeder 17. Die zweite Vorspannungsfeder 17 stützt sich gegen einen zweiten Gewindestift 18 ab, durch den das Maß der Zusammendrückung und somit der Vorspannung der zweiten Vorspannungsfeder 17 bestimmt werden kann.

Der zweite Steuerkolben 11 ist in der erfindungsgemäßen Ausführungsform als Differenzflächenkolben ausgebildet. Die Fläche 19 des zweiten Steuerkolbens 11, die über die Verbindungsleitung 26 vom Druck des zweiten Druckraums 7 beaufschlagt wird und die auf der Seite der zweiten Vorspannungsfeder 17 im Führungszylinder 25 des zweiten Steuerkolbens 11 liegt, ist größer als die Fläche 20, die zur Seite des Stellgliedes 15 liegt und ebenfalls vom Druck des zweiten Druckraums 7 beaufschlagt wird. Dadurch entsteht mit zunehmenden Druck im zweiten Druckraum 7 eine Kraft auf den Differenzflächenkolben, respektive den zweiten Steuerkolben 11, die gegen die zweite Vorspannungsfeder 17 gerichtet ist. Zu dieser Kraft addiert sich nun die Kraft des Stellgliedes 15, die über das Verbindungselement 16 ebenfalls in derselben Richtung auf den zweiten Steuerkolben 11 wirkt. In der erfindungsgemäßen Ausführung, die hier dargestellt ist, handelt es sich bei dem Stellglied 15 um einen Proportional-Elektromagneten. Mit zunehmenden Strom kann somit die Kraft auf den Differenzkolben, den zweiten Steuerkolben 11, erhöht werden und der Druck im zweiten Druckraum 7 der nötig ist, um den zweiten Steuerkolben 11 von seinem Anschlag 14 weg gegen die zweite Vorspannungsfeder 17 zu bewegen, stufenlos geregelt werden.

Weiter ist auf der Zeichnung ein Wechselventilkolben 21 mit einer durchgehenden Innenbohrung 22 dargestellt, die hier nur gestrichelt angedeutet ist. Der Wechselventilkolben 21 wird von einer Arbeitsleitung A und einer weiteren Arbeitsleitung B mit Druck beaufschlagt. Je nach dem, welche der Arbeitsleitungen A, B den höheren Druck aufweist, wird der Wechselventilkolben 21 in eine seiner beiden Anschlagspositionen verschoben und gibt einmal die Verbindung von der ersten Arbeitsleitung A, wenn diese den höheren Druck aufweist, zum ersten Druckraum 6 frei, oder wenn die Arbeitsleitung B den höheren Druck aufweist über die Bohrung 22 die Verbindung zwischen der zweiten Arbeitsleitung B und dem ersten Druckraum 6 frei. Dadurch ist es vorteilhaft möglich, mit einem Drucksteuerventil zwei Arbeitsleitungen gleichzeitig zu regeln, dergestalt, daß die Pumpe abhängig von dem höheren Druck in den beiden Arbeitsleitungen A, B geregelt wird.

Wenn nun der Druck im ersten Druckraum 6 ansteigt, fließt Hydraulikfluid über die Drossel 8 in den zweiten Druckraum 7 bis sich dort der Druck angepaßt hat. Überschreitet der Druck im zweiten Druckraum 7 einen voreingestellten Wert, so öffnet der zweite Steuerkolben 11 mit seiner Steuerkante 12 einen Abfluß für das Hydraulikfluid. Dieser Öffnungsdruck des zweiten Steuerkolbens 11 wird durch die Differenz zwischen Kraft der zweiten Vorspannungsfeder 17 und Kraft des Stellglieds 15 bestimmt. Beim Öffnen gibt der zweite Steuerkolben 11 an seiner Steuerkante 12 einen Abfluß für das Hydraulikfluid frei, sobald diese Steuerkante 12 die Kante 13 des Führungszylinders 25 überstreicht. Durch das Abfließen des Hydraulikfluids und da durch die Drossel 8 nur eine beschränkte Menge Hydraulikfluid nachfließen kann, fällt der Druck im zweiten Druckraum 7 ab und der erste Steuerkolben 1 wird von seinem Anschlag 3 gegen den Druck der ersten Vorspannngsfeder 4 durch den Druck des Hydraulikfluids im ersten Druckraum 6 abgehoben. Dadurch überstreicht die Steuerkante 2 des ersten Steuerkolbens 1 die Öffnung der Stelldruckleitung 5 und gibt einen Abfluß 23 für die Stelldruckleitung 5 frei. Der Stelldruck in der Stelldruckleitung 5 fällt ab und dadurch wird das Fördervolumen einer über diese Stelldruckleitung 5 geregelten Hydropumpe heruntergeregelt bzw. die Hydropumpe zurückgeschwenkt.

Wenn das Stellglied 15 seine maximale Kraft auf den zweiten Steuerkolben 11 ausübt, so daß dieser zweite Steuerkolben 11 immer geöffnet ist, so wird der minimal zu regelnde Druck im ersten Druckraum 6 allein durch die erste Vorspannungsfeder 4 und den Drosselwiderstand der Drossel 8 bestimmt. Daher ist der minimale Druck, den das Drucksteuerventil regeln kann, am Gewindestift 10 über den sich die erste Vorspannungsfeder 4 abstützt und durch den diese zusammengedrückt wird, einstellbar.

Am zweiten Gewindestift 18 kann entsprechend der maximale Regeldruck eingestellt werden, der durch das Drucksteuerventil geregelt werden kann, wenn das Stellglied 15 keinerlei Kraft ausübt. Durch die Komprimierung der zweiten Vorspannungsfeder 17 wird die maximale Vorspannungskraft auf den zweiten Steuerkolben 11 ausgeübt. Über den zweiten Druckraum 7 und die Drossel 8 wird dieser Druck übertragen und ist der maximal mögliche Regeldruck im ersten Druckraum 6.

Durch die Erfindung werden die Vorteile eines Ventils mit einem Pilotventil, wie schnelles Ansprechen und Servowirkung, mit der Möglichkeit einer Fernsteuerung durch eine Steuerleitung verbunden. Somit kann während des Betriebs das Drucksteuerventil in seiner Regelgröße verändert werden. Ebenfalls vorteilhaft erfolgt die Drucksteuerung nicht durch den Abfluß eines Volumenstromes aus der Arbeitsleitung mit der damit verbundenen Verlustleistung und insbesondere Wärmeentwicklung, sondern indem die Verstellung der Hydropumpe geregelt wird. Durch die Vorschaltung des Wechselventilkolbens 21 ist es möglich, von zwei Arbeitsleitungen A und B den jeweils höheren Druck als Regelgröße zu nehmen.

## Patentansprüche

1. Drucksteuerventil mit einem ersten Steuerkolben (1), der zwischen einem an den ersten Steuerkolben (1) angrenzenden, mit zumindest einer Arbeitsleitung (A, B) verbundenen, ersten Druckraum (6) und einem an den ersten Steuerkolben (1) angrenzenden zweiten Druckraum (7) angeordnet ist und der von einer ersten Vorspannungsfeder (4) gegen einen Anschlag (3) vorgespannt ist, und einer Drossel (8), die den ersten Druckraum (6) und den zweiten Druckraum (7) verbindet,
wobei der zweite Druckraum (7) mit einem zweiten Steuerkolben (11) verbunden ist, der von einer zweiten Vorspannungsfeder (17) vorgespannt ist, und der bei Überschreiten eines vorbestimmten Drucks in dem zweiten Druckraum (7) so weit verschoben wird, dass eine Steuerkante (12) des zweiten Steuerkolbens (11) eine Verbindung des zweiten Druckraums (7) zu einem Hydraulikfluidabfluss (23) freigibt, und
wobei der erste Steuerkolben (1) eine Steuerkante (2) aufweist, die bei Verschiebung des ersten Steuerkolbens (1) gegen die erste Vorspannungsfeder(4), eine Stelldruckleitung (5) mit dem Hydraulikfluidabfluss (23) verbindet, und auf den zweiten Steuerkolben (11) ein mit einem Steuersignal angesteuertes Stellglied (15) gegen die zweite Vorspannungsfeder (17) einwirkt,
**dadurch gekennzeichnet,**
**dass** die erste Vorspannungsfeder (4) sich gegen einen ersten Gewindestif (10) abstutzt und mit diesem der minimale Regeldruck in der Arbeitsleitung (A, B) bei maximal angesteuertem Stellglied (15) einstellbar ist.

2. Drucksteuerventil nach Anspruch 1,
**dadurch gekennzeichnet,**
**dass** die Drossel (8) in einer Bohrung (9) in dem ersten Steuerkolben (1) angeordnet ist.

3. Drucksteuerventil nach Anspruch 1 oder 2,
**dadurch gekennzeichnet,**
**dass** die Steuerkante (12) des zweiten Steuerkolbens (11) einen Abfluss freigibt, der einen größeren Querschnitt als die Drossel (8) hat.

4. Drucksteuerventil nach einem der vorhergehenden Ansprüche,
**dadurch gekennzeichnet,**
**dass** der zweite Steuerkolben (11) ein Differenzflächenkolben ist, der zwei gegeneinander wirkende mit dem Druck des zweiten Druckraums (7) beaufschlagte Flächen (19, 29) aufweist, die sich unterscheiden.

5. Drucksteuerventil nach einem der vorhergehenden Ansprüche,
**dadurch gekennzeichnet,**
**dass** das geregelte Stellglied (15) ein Proportionalmagnet mit einem diesen durchfließenden elektrischen Strom als Steuersignal ist.

6. Drucksteuerventil nach einem der vorhergehenden Ansprüche,
**dadurch gekennzeichnet,**
**dass** an die Steuerkante (2) anschließend der erste Steuerkolben () am äußeren Umfang zumindest eine Aussparung (24) aufweist, über die aus der Stelldruckleitung (5) Hydraulikfluid zum Hydraulikfluidabfluss (23) abfließen kann.

7. Drucksteuerventil gemäß Anspruch 6,
**dadurch gekennzeichnet,**
**dass** die Aussparung (24) keine Verbindung zum ersten Druckraum (6) oder zweiten Druckraum (7) aufweist.

8. Drucksteuerventil nach einem der vorhergehenden Ansprüche,
**dadurch gekennzeichnet,**
**dass** die zweite Vorspannungsfeder (17) sich gegen einen zweiten Gewindestift (18) abstützt und an diesem der maximale Regeldruck in der Arbeitsleitung (A, B) bei inaktivem Stellglied (15) einstellbar ist.

9. Drucksteuerventil nach einem der vorhergehenden Ansprüche,
**dadurch gekennzeichnet,**
**dass** ein Wechselventilkolben (21) zwischen dem ersten Druckraum (6) und zwei Arbeitsleitungen (A, B) angeordnet ist, der in einer Bohrung des Drucksteuerventils (1) gleitend angeordnet ist und durch Beaufschlagung mit dem jeweils höheren Druck eines Hydraulikfluids in einer der beiden Arbeitsleitungen (A, B) zwischen zwei Endpositionen verschiebbar ist, wobei der Wechselventilkolben (21) eine sich über seine gesamte Länge erstreckende Innenbohrung (22) aufweist, durch die der erste Druckraum (6) in einer der zwei Endpositionen des Wechselventilkolbens (21) durch den höheren Druck beaufschlagt ist.

## Claims

1. Pressure control valve, comprising a first control piston (1) which is disposed between a first pressure chamber (6), which adjoins the first control piston (1) and communicates with at least one working line (A, B), and a second pressure chamber (7) adjoining the first control piston (1), and which first control piston (1) is biased by a first biasing spring (4) against a stop (3), and comprising a constriction (8) which connects the first pressure chamber (6) and the second pressure chamber (7),
wherein the second pressure chamber (7) communicates with a second control piston (11) which is biased by a second biasing spring (17) and which, upon a predefined pressure being exceeded in the second pressure chamber (7), is displaced to the extent that a control edge (12) of the second control piston (11) releases a communication of the second pressure chamber (7) to a hydraulic fluid discharge (23), and
wherein the first control piston (1) has a control edge (2) which, upon displacement of the first control piston (1) against the first biasing spring (4), connects an actuating-pressure line (5) to the hydraulic fluid discharge (23), and an actuator (15), driven by means of a control signal, acts on the second control piston (11) against the second biasing spring (17),
**characterized in that**
the first biasing spring (4) bears against a first setscrew (10), and by means of the latter the minimum regulating pressure can be set in the working line (A, B) with the actuator (15) being maximally driven.

2. Pressure control valve according to Claim 1,
**characterized in that**
the constriction (8) is disposed in a bore (9) in the first control piston (1).

3. Pressure control valve according to either of Claims 1 or 2,
**characterized in that**
the control edge (12) of the second control piston (11) releases a discharge which has a greater cross-section than the constriction (8).

4. Pressure control valve according to any one of the preceding Claims,
**characterized in that**
the second control piston (11) is a differential area piston which has two differing areas (19, 29) which act in opposition to each other and are subjected to the pressure of the second pressure chamber (7).

5. Pressure control valve according to any one of the preceding Claims,
**characterized in that**
the regulated actuator (15) is a proportional magnet having, as a control signal, an electrical current flowing through it.

6. Pressure control valve according to any one of the preceding claims,
**characterized in that**
adjoining the control edge (2), the first control piston (1) has, at the outer circumference, at least one recess (24) via which hydraulic fluid can be discharged out of the actuating-pressure line (5) to the hydraulic fluid discharge (23).

7. Pressure control valve according to Claim 6,
**characterized in that**
the recess (24) does not communicate with the first pressure chamber (6) or the second pressure chamber (7).

8. Pressure control valve according to any one of the preceding Claims,
**characterized in that**
the second biasing spring (17) bears against a second setscrew (18), and at the latter the maximum regulating pressure can be set in the working line (A, B) with the actuator (15) being inactive.

9. Pressure control valve according to any one of the preceding Claims,
**characterized in that**
disposed between the first pressure chamber (6) and two working lines (A, B) is a shuttle valve piston (21), which is disposed in a sliding manner in a bore of the pressure control valve (1) and which, by being subjected to the respectively higher pressure of a hydraulic fluid in one of the two working lines (A, B), can be displaced between two end positions, the shuttle valve piston (21) having an inner bore (22), extending over its entire length, through which the first pressure chamber (6) is subjected to the higher pressure when the shuttle valve piston (21) is in one of the two end positions.

## Revendications

1. Soupape de commande de pression comprenant un premier piston de commande (1) qui est interposé entre une première chambre de pression (6) limitrophe dudit premier piston de commande (1) et reliée à au moins un conduit de travail (A, B), et une seconde chambre de pression (7) limitrophe dudit premier piston de commande (1), et est précontraint contre une butée (3) par un premier ressort de précontrainte (4) ; et un étranglement (8) reliant la première chambre de pression (6) et la seconde chambre de pression (7),
la seconde chambre de pression (7) étant reliée à un second piston de commande (11) qui est précontraint par un second ressort de précontrainte (17) et qui, en cas de dépassement d'une pression prédéterminée dans la seconde chambre de pression (7), est animé d'un coulissement jusqu'à ce qu'une arête de commande (12) dudit second piston de commande (11) libère une communication de la seconde chambre de pression (7) avec une évacuation (23) de fluide hydraulique, et
le premier piston de commande (1) présentant une arête de commande (2) qui, lors d'un coulissement du premier piston de commande (1) en opposition au premier ressort de précontrainte (4), relie un conduit (5) de pression de réglage à l'évacuation (23) de fluide hydraulique, sachant qu'un organe de manoeuvre (15), activé par un signal de commande, agit sur le second piston de commande (11) en opposition au second ressort de précontrainte (17),
**caractérisée par le fait**
**que** le premier ressort de précontrainte (4) prend appui contre une première cheville filetée (10) par laquelle la pression minimale de régulation, régnant dans le conduit de travail (A, B), peut être réglée lorsque l'activation de l'organe de manoeuvre (15) est maximale.

2. Soupape de commande de pression selon la revendication 1,
**caractérisée par le fait**
**que** l'étranglement (8) se trouve dans un alésage (9) pratiqué dans le premier piston de commande (1).

3. Soupape de commande de pression selon la revendication 1 ou 2,
**caractérisée par le fait**
**que** l'arête de commande (12) du second piston de commande (11) libère une évacuation dotée d'une plus grande section transversale que l'étranglement (8).

4. Soupape de commande de pression selon l'une des revendications précédentes,
**caractérisée par le fait**
**que** le second piston de commande (11) est un piston à surfaces différentielles, présentant deux surfaces (19, 20) différant l'une de l'autre, agissant à l'opposé l'une de l'autre et sollicitées par la pression de la seconde chambre de pression (7).

5. Soupape de commande de pression selon l'une des revendications précédentes,
**caractérisée par le fait**
**que** l'organe de manoeuvre (15) régulé est un aimant proportionnel dont le signal de commande se présente comme un courant électrique circulant dans ledit aimant.

6. Soupape de commande de pression selon l'une des revendications précédentes,
**caractérisée par le fait**
**que** le premier piston de commande (1) comporte sur le pourtour extérieur, dans la continuité directe de l'arête de commande (2), au moins une dépouille (24) par l'intermédiaire de laquelle du fluide hydraulique peut s'écouler, à partir du conduit (5) de pression de réglage, en direction de l'évacuation (23) de fluide hydraulique.

7. Soupape de commande de pression selon la revendication 6,
**caractérisée par le fait**
**que** la dépouille (24) ne présente aucune liaison vers la première chambre de pression (6) ou la seconde chambre de pression (7).

8. Soupape de commande de pression selon l'une des revendications précédentes,
**caractérisée par le fait**
**que** le second ressort de précontrainte (17) prend appui contre une seconde cheville filetée (18) sur laquelle la pression maximale de régulation, régnant dans le conduit de travail (A, B), peut être réglée lorsque l'organe de manoeuvre (15) est inactif.

9. Soupape de commande de pression selon l'une des revendications précédentes,
**caractérisée par le fait**
**qu'**un piston (21) à soupape de sélection, interposé entre la première chambre de pression (6) et deux conduits de travail (A, B), est logé à coulissement dans un alésage du piston de commande (1) et peut être animé de coulissements, entre deux positions extrêmes, en étant sollicité par la pression respectivement supérieure d'un fluide hydraulique régnant dans l'un des deux conduits de travail (A, B), ledit piston (21) à soupape de sélection comportant un alésage intérieur (22) qui s'étend sur toute sa longueur et par l'intermédiaire duquel la première chambre de pression (6) est sollicitée par la pression supérieure dans l'une des deux positions extrêmes dudit piston (21) à soupape de sélection.
